# EUROPEAN PATENT APPLICATION

(11) **EP 1 791 158 A1**
(43) Date of publication of application: **30.05.2007**
(21) Application number: 05783567.0
(22) Date of filing: 14.09.2005
(51) Int. Cl.: H01J 31/12, H01J 29/87

(54) **IMAGE DISPLAY DEVICE**

(30) Priority: 16.09.2004 JP 2004270081
(71) Applicant: KABUSHIKI KAISHA TOSHIBA, Tokyo 105-8001 (JP)
(72) Inventor: UEDA, Yukinori c/o Int.Prop.Div. Toshiba Corp., Tokyo 105-8001 (JP); ISHIKAWA, Satoshi c/o Int.Prop.Div. Toshiba Corp., Tokyo 105-8001 (JP)
(74) Representative: HOFFMANN EITLE
(86) International application number: PCT/JP2005/016959
(87) International publication number: WO 2006/030835

(57) **Abstract**

A plurality of first spacers (30a) which support an atmospheric load are provided between a first substrate formed with a phosphor screen and a second substrate provided with a plurality of electron emission sources. The plurality of spacers (30a) are located in a manner such that a plurality of spacer columns (C1 to C4), each of which includes the plurality of spacers (30a) arranged side by side with gaps therebetween in a first direction (Y), are located side by side with gaps therebetween in a second direction (X), the first direction (Y) being a direction parallel to one side of the first substrate, the second direction (X) being a direction perpendicular to the first direction (Y). The plurality of spacers (30a) which constitute each of the spacer columns (C1 to C4) are located staggered in the first direction (Y) with respect to the plurality of spacers (30a) which constitute adjacent other spacer column (C1 to C4). Thus, there may be provided an image display device in which shadows of the spacers can be made inconspicuous without reducing the strength of an envelope, so that the image quality can be improved.

## Description

### Technical Field

This invention relates to an image display device provided with substrates located opposite each other and spacers located between the substrates.

### Background Art

In recent years, various flat-type image display devices have been noticed as a next generation of lightweight, thin display devices to replace cathode-ray tubes (CRTs). For example, a surface-conduction electron emission device (SED) has been developed as a kind of a field emission device (FED) that functions as a flat-type display device.

This SED comprises a first substrate and a second substrate that are located opposite each other with a predetermined space between them. These substrates have their respective peripheral portions joined together by a rectangular sidewall, thereby forming a vacuum envelope. Three-color phosphor layers and a metal back are formed on the inner surface of the first substrate. Arranged on the inner surface of the second substrate are a large number of electron emitting elements for use as electron sources, which correspond to pixels, individually, and excite the phosphors.

For the SED described above, it is important to maintain a high degree of vacuum in the space between the first substrate and the second substrate, that is, in the vacuum envelope. If the degree of vacuum is low, the life of the electron emitting elements, and hence, the life of the device shorten inevitably. Since a vacuum is maintained between the first substrate and the second substrate, moreover, an atmospheric pressure acts on the first substrate and the second substrate. In order to support the atmospheric load that acts on these substrates and maintain the gap between the substrates, therefore, a large number of plate-like or columnar spacers are located between the two substrates. Proposed in, for example, Jpn. Pat. Appln. KOKAI Publication No. 2001-272927, moreover, is an apparatus in which a large number of spacers are set up on a metal plate to constitute a spacer assembly and the spacer assembly is arranged between the first and second substrates.

In the SED spacer constructed in this manner, a large number of spacers are arranged side by side in a lattice. Specifically, the spacers are arranged side by side in a plurality of rows and a plurality of columns in directions parallel to long and short sides of the envelope.

In displaying an image on the SED described above, an anode voltage is applied to the phosphor layers, and electron beams emitted from the electron emitting elements are accelerated by the anode voltage and collided with the phosphor layers. Thereupon, the phosphors glow and display the image. In this configuration, the electron beams may possibly be intercepted by the spacers that are provided between the first substrate and the second substrate and appear as shadows on a display screen. If a large number of spacers are provided side by side at predetermined pitches in a lattice, in this case, the shadows of the spacers are visually conspicuous and sometimes may appear as stripes, so that there is a possibility of the image display quality being lowered.

Possibly, the shadows attributable to the spacers may be made inconspicuous by reducing the number of set spacers to enlarge the array pitch. In this case, however, the strength of the vacuum envelope is reduced, so that it is hard to satisfactorily support an atmospheric load that acts on the first and second substrates.

### Disclosure of Invention

This invention has been made in consideration of these circumstances, and its object is to provide an image display device in which shadows of spacers can be made inconspicuous without reducing the strength of an envelope, so that the image quality can be improved.

In order to achieve the object, according to an aspect of the invention, there is provided an image display device comprising: an envelope having a first substrate formed with a phosphor screen and a second substrate which is located opposite the first substrate across a gap and on which a plurality of electron emission sources configured to emit electron toward the phosphor screen are located; and a plurality of spacers which are arranged between the first and second substrates and support an atmospheric load acting on the first substrate and the second substrate,
the plurality of spacers being located in a manner that a plurality of spacer columns, each of which includes the plurality of spacers arranged side by side with gaps therebetween in a first direction, are arranged side by side with gaps therebetween in a second direction, the first direction being a direction parallel to one side of the first substrate, the second direction being a direction perpendicular to the first direction, the plurality of spacers which constitute each spacer column being located staggered in the first direction with respect to the plurality of spacers which constitute adjacent other spacer column.

### Brief Description of Drawings

FIG. 1 is a perspective view showing an SED according to a first embodiment of this invention;
FIG. 2 is a perspective view of the SED broken away along line II-II of FIG. 1;
FIG. 3 is a sectional view enlargedly showing the SED;
FIG. 4 is a perspective view showing a spacer structure of the SED;
FIG. 5 is a plan view showing an array of spacers of the SED;
FIG. 6 is a diagram comparatively showing the visibilities of the SED and another SED with spacers arrayed in a lattice;
FIG. 7 is a broken-away perspective view showing an SED according to a second embodiment of this invention; and
FIG. 8 is a sectional view enlargedly showing the SED according to the second embodiment.

### Best Mode for Carrying Out the Invention

An embodiment in which this invention is applied to an SED as a flat-type image display device will now be described in detail with reference to the drawings.

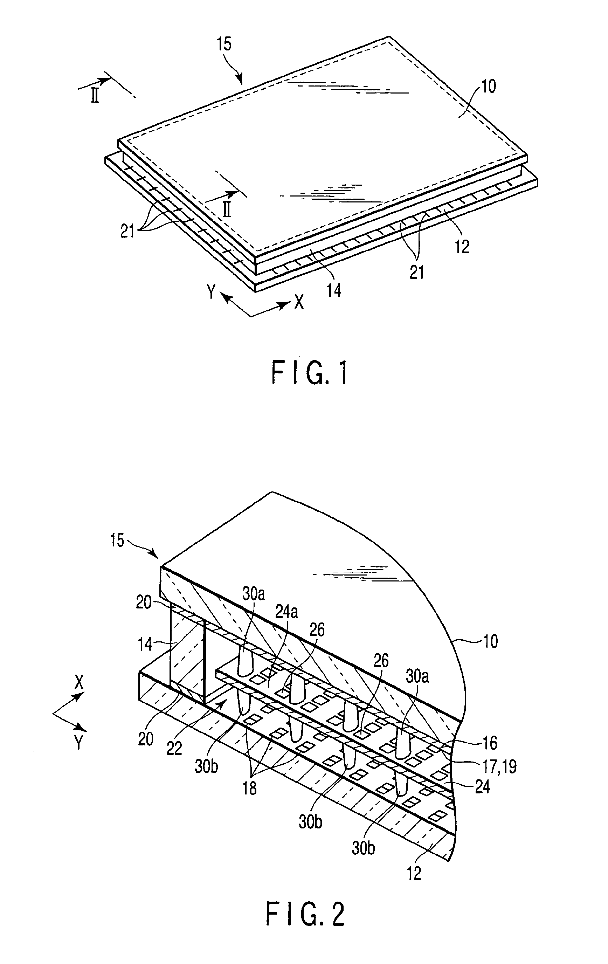

As shown in FIGS. 1 to 3, the SED comprises a first substrate 10 and a second substrate 12, which are formed of a rectangular glass plate each. These substrates are located opposite each other with a gap of about 1.0 to 2.0 mm between them. The first substrate 10 and the second substrate 12 have their respective peripheral edge portions joined together by a rectangular sidewall 14 of glass, thereby forming a flat rectangular vacuum envelope 15 of which the inside is kept vacuum. The sidewall 14 that functions as a joint member is sealed to the peripheral edge portion of the first substrate 10 and the peripheral edge portion of the second substrate 12 with a sealant 20 of, for example, low-melting-point glass or low-melting-point metal, whereby these substrates are joined together.

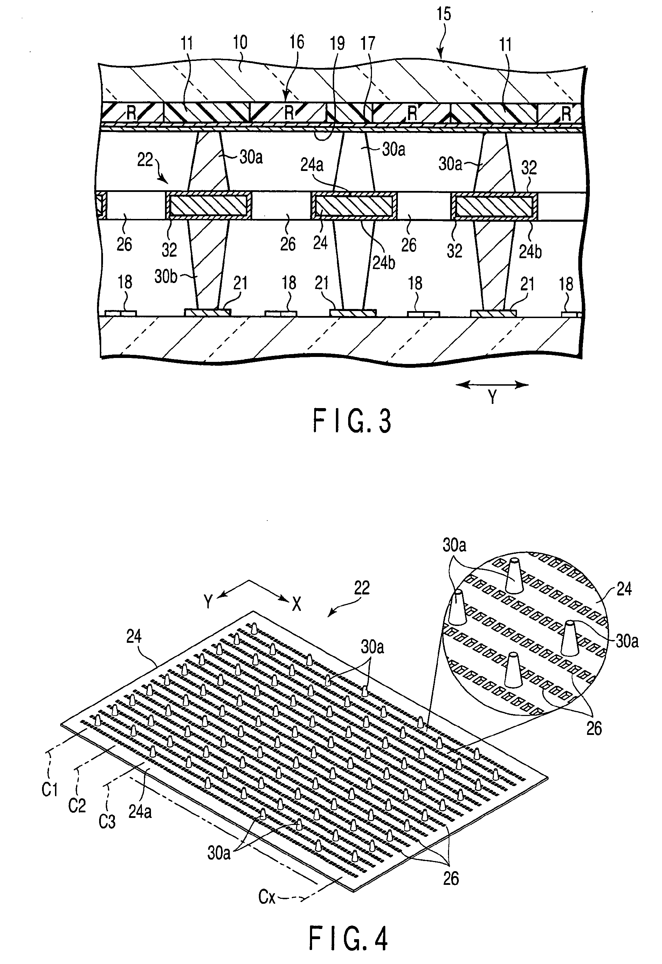

As shown in FIGS. 2 and 3, a phosphor screen 16 that functions as a fluorescent screen is formed on the inner surface of the first substrate 10. The phosphor screen 16 is formed by arranging side by side phosphor layers R, G and B, which glow red, blue, and green, individually, and a light shielding layer 11. These phosphor layers are strip-shaped or dot-shaped. In the present embodiment, the phosphor layers R, G and B are in the form of a substantially rectangular dot each. If the transverse direction (first direction) and the longitudinal direction (second direction) of the first substrate 10 and the second substrate 12 are Y and X, respectively, the phosphor layers R, G and B are alternately provided side by side in the X-direction, and the phosphor layers of the same color are provided collaterally in the Y-direction. A metal back 17 of aluminum or the like and a getter film 19 are successively formed on the phosphor screen 16.

Provided on the inner surface of the second substrate 12 are a large number of surface-conduction electron emitting elements 18 for use as electron sources, which individually emit electron beams and excite the phosphor layers R, G and B of the phosphor screen 16. These electron emitting elements 18 are arrayed in a plurality of columns and a plurality of rows corresponding to pixels. Each electron emitting element 18 is formed of an electron emitting portion (not shown), a pair of element electrodes that apply voltage to the electron emitting portion, etc. Further, a large number of wires 21 that apply potential to the electron emitting elements 18 are provided in a matrix on the inner surface of the second substrate 12, and their respective end portions are led out of the vacuum envelope 15.

As shown in FIGS. 2 and 3, the SED comprises a spacer structure 22, which is located between the first substrate 10 and the second substrate 12. The spacer structure 22 is provided with a supporting substrate 24, formed of a metal plate, and a large number of columnar spacers 30 set up integrally on the supporting substrate. The supporting substrate 24 is formed having a rectangular shape that corresponds to the phosphor screen 16 in size. It has a first surface 24a opposed to the inner surface of the first substrate 10 and a second surface 24b opposed to the inner surface of the second substrate 12, and is located parallel to these substrates.

As shown in FIGS. 2 to 4, the supporting substrate 24 is formed of a plate of, for example, an iron-nickel-based metal with a thickness of 0.1 to 0.25 mm. A plurality of electron beam apertures 26 are formed in the supporting substrate 24 by etching or the like. As mentioned later, all the electron beam apertures 26 but some are formed having a rectangular shape measuring 0.15 to 0.25 mm × 0.15 to 0.25 mm, for example. If the longitudinal direction of the first substrate 10 and the second substrate 12 and the transverse direction perpendicular thereto are a first direction X and a second direction Y, respectively, the electron beam apertures 26 are arrayed at predetermined pitches along the first direction X and at pitches larger than the pitches in the first direction X along the second direction Y. The phosphor layers R, G and B of the phosphor screen 16 formed on the first substrate 10 and the electron emitting elements 18 on the second substrate 12 are arrayed at the same pitches as the electron beam apertures 26 with respect to the first direction X and the second direction Y, and face the electron beam apertures, individually.

The first and second surfaces 24a and 24b of the supporting substrate 24 and the respective inner wall surfaces of the electron beam apertures 26 are covered by an insulating layer 37, which is formed of an insulating material consisting mainly of glass or the like, e.g., Li-based alkaline borosilicic acid glass, and has a thickness of about 40 µm.

A plurality of first spacers 30a are set up integrally on the first surface 24a of the supporting substrate 24 and situated individually between the electron beam apertures 26 that adjoin in the Y-direction. The respective distal ends of the first spacers 30a abut on the inner surface of the first substrate 10 through the getter film 19, the metal back 17, and the light shielding layer 11 of the phosphor screen 16.

A plurality of second spacers 30b are set up integrally on the second surface 24b of the supporting substrate 24 and situated individually between the electron beam apertures 26 that adjoin in the Y-direction. The respective distal ends of the second spacers 30b abut on the inner surface of the second substrate 12. In this case, the distal end of each second spacer 30b is situated on a wire 21 that is provided on the inner surface of the second substrate 12. The first and second spacers 30a and 30b are arrayed at pitches several times as large as those of the electron beam apertures 26 in the longitudinal direction X and the transverse direction Y. The first and second spacers 30a and 30b are situated in alignment with each other and formed integrally with the supporting substrate 24 in a manner such that the supporting substrate 24 is held between them from both sides.

As shown in FIGS. 2 to 4, each of the first and second spacers 30a and 30b is tapered so that its diameter is reduced from the supporting substrate 24 side toward its extended end. For example, each first spacer 30a has an elongate oblong cross-sectional shape. Likewise, each second spacer 30b has an elongate oblong cross-sectional shape. The first and second spacers 30a and 30b are provided on the supporting substrate 24 in a manner such that the longitudinal direction of their sections is in alignment with the X-direction.

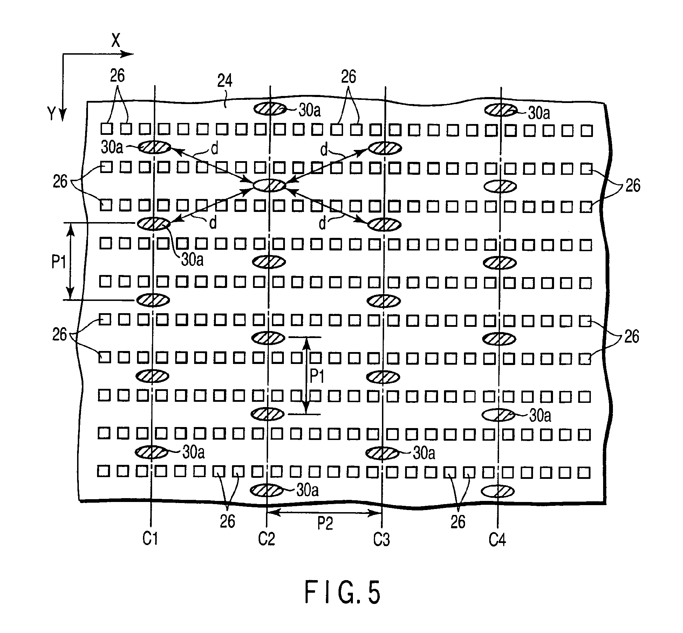

As shown in FIGS. 4 and 5, the first and second spacers 30a and 30b are arranged side by side to form a plurality of spacer columns C1 to Cx. The spacer columns C1 to Cx individually extend in the Y-direction and are arranged side by side with gaps in the X-direction between them. Each spacer column includes a plurality of first and second spacers 30a and 30b that are arranged side by side with gaps in the Y-direction between them.

The plurality of first and second spacers 30a and 30b that constitute each spacer column are individually provided side by side at first pitches P1 in the Y-direction. The plurality of spacer columns C1 to Cx are provided side by side at second pitches P2 in the X-direction. The second pitches P2 are set to be longer than the first pitches P1.

The plurality of first and second spacers 30a and 30b that constitute each spacer column are staggered in the Y-direction with respect to a plurality of first and second spacers that constitute other spacer columns adjacent thereto without overlapping them in the X-direction. In the present embodiment, the plurality of spacers 30a and 30b that constitute each spacer column are staggered by a pitch (P1/2) equal to half of the first pitch P1 in the Y-direction, with respect to the plurality of spacers 30a and 30b that constitute the adjacent other spacer columns. This deviation is not limited to P1/2 but may be increased or reduced as required.

Thus, the first and second spacers 30a and 30b are arrayed in a so-called zigzag fashion, as viewed in a direction perpendicular to the surface of the supporting substrate 24. A distance d between the first and second spacers 30a and 30b and the directly adjacent first and second spacers is longer than the second pitch P2 in the X-direction.

The spacer structure 22 constructed in this manner is located between the first substrate 10 and the second substrate 12. The first and second spacers 30a and 30b abut on the respective inner surfaces of the first substrate 10 and the second substrate 12, thereby supporting an atmospheric load that acts on these substrates and keeping the space between the substrates at a predetermined value.

The SED comprises a voltage supply portion (not shown) that applies a voltage to the supporting substrate 24 and the metal back 17 of the first substrate 10. In displaying an image, the electron emitting elements 18 are driven so that electron beams are emitted from some arbitrary electron emitting elements, and an anode voltage is applied to the phosphor screen 16 and the metal back 17. The electron beams emitted from the electron emitting elements 18 are accelerated by the anode voltage and passed through the electron beam apertures 26 of the supporting substrate 24, whereupon they collide with the phosphor screen 16. Thus, the phosphor layers of the phosphor screen 16 are excited to luminescence and display the image.

The following is a description of a method of manufacturing the SED constructed in this manner. A manufacturing method for the spacer structure 22 will be described first.

After a metal plate of Fe-50% Ni with a plate thickness of 0.12 mm is first degreased, washed, and dried, the electron beam apertures 26 are formed by etching. After the entire metal plate is blackened, a solution that contains glass particles is applied by spraying to the surface of the supporting substrate including the respective inner surfaces of the electron beam apertures 26 and dried. Thereupon, the supporting substrate 24 is obtained having the insulating layer 32 formed thereon.

An upper die and a lower die are prepared as molding dies. The upper die and the lower die are flat plates formed of a transparent material that transmits ultraviolet rays, e.g., clear silicone or clear polyethylene terephthalate. The upper die has a flat contact surface in contact with the supporting substrate and a large number of bottomed spacer forming holes for molding the first spacers 30a. The spacer forming holes individually open in the contact surface of the upper die and are arranged at predetermined spaces. Likewise, the lower die has a flat contact surface and a large number of bottomed spacer forming holes for molding the second spacers 30b. The spacer forming holes individually open in the contact surface of the lower die and are arranged at predetermined spaces.

Then, the spacer forming holes of the upper die and the spacer forming holes of the lower die are loaded with a spacer forming material. A glass paste that contains at least an ultraviolet-curing binder (organic component) and a glass filler is used as the spacer forming material. The specific gravity and viscosity of the glass paste are selected as required.

The upper die is positioned so that the spacer forming holes filled with the spacer forming material individually face regions between the electron beam apertures, and the contact surface is brought into close contact with the first surface of the supporting substrate 24. Likewise, the lower die is positioned so that the spacer forming holes individually face regions between the electron beam apertures, and the contact surface is brought into close contact with the second surface 24b of the supporting substrate 24. An adhesive may be previously applied to spacer setup positions on the supporting substrate 24 by means of a dispenser or by printing. Thus, an assembly is formed having the supporting substrate 24, upper die, and lower die. In the assembly, the spacer forming holes of the upper die and the spacer forming holes of the lower die are arranged staggered with respect to one another in the surface direction of the supporting substrate 24.

Ultraviolet (UV) rays are applied to the spacer forming material from outside the upper die and the lower die that are kept in close contact with the supporting substrate 24. Since the upper die and the lower die are individually formed of an ultraviolet light transmitting material, the radiated ultraviolet rays are transmitted through the upper die and the lower die and applied to the loaded spacer forming material. Thus, the spacer forming material is ultraviolet-light cured. Subsequently, the upper die and the lower die are released from the supporting substrate 24 with the cured spacer forming material left on the supporting substrate 24. In these processes, the spacer forming material molded in a predetermined shape is transferred onto the surfaces of the supporting substrate 24.

Then, the supporting substrate with the spacer forming material thereon is heat-treated in a heating furnace so that the binder is evaporated from the spacer forming material, and the spacer forming material and the insulating layer 37 formed on the supporting substrate 24 are then fired at about 500 to 550°C for 30 minutes to 1 hour. The spacer forming material and the insulating layer 37 are vitrified by the firing, whereupon the spacer structure 22 is obtained having the first and second spacers 30a and 30b built-in on the supporting substrate 24.

In the manufacture of the SED, on the other hand, the first substrate 10, which is provided with the phosphor screen 16 and the metal back 17, and the second substrate 12, which is provided with the electron emitting elements 18 and the wires 21 and to which the sidewall 14 is joined, are prepared in advance. Subsequently, after the spacer structure 22 obtained in this manner is positioned on the second substrate 12, four corners of the supporting substrate 24 are welded to metallic posts that are set up on four corner portions of the second substrate, individually. By doing this, the spacer structure 22 is fixed to the second substrate 12. It is necessary only that the supporting substrate 24 be fixed at two spots at the least.

Thereafter, the first substrate 10 and the second substrate 12 to which the spacer structure 22 is fixed are located in a vacuum chamber, the vacuum chamber is evacuated, and the getter film 19 is formed on the metal back 17 of the first substrate. Subsequently, the first substrate 10 is joined to the second substrate 12 by means of the sidewall 14, and the spacer structure 22 is interposed between these substrates. Thus, the SED with the spacer structure 22 is manufactured.

According to the SED constructed in this manner, the plurality of first and second spacers 30a and 30b are arranged between the first substrate 10 and the second substrate 12, and these first and second spacers are located in a manner such that a plurality of spacer columns, which include a plurality of spacers arranged side by side with gaps therebetween in the Y-direction, are arranged side by side with gaps therebetween in the X-direction. The plurality of spacers that constitute each spacer column are located staggered in the Y-direction with respect to the plurality of spacers which constitute the adjacent other spacer columns.

According to this spacer layout configuration, compared with a case where a plurality of spacers are arrayed longitudinally and transversely in a lattice, the shadows of the spacers are less conspicuous, so that the image quality can be improved. Thus, based on the mechanism of the angle of human vision, or sensitivity, a non-obstructive spacer layout may be devised despite the presence of some shadows of the spacers. The human eye is characterized by low resolution with respect to diagonal directions. If the aforesaid zigzag layout is used, the plurality of spacers are arranged in a diagonal direction with respect to the sides of the first and second substrates, and the distance d between the spacers in this diagonal direction is smaller than the second pitch P2 in the transverse direction. In the case of the aforesaid layout, at the same time, there is an advantage that the shadows of the spacers are fused with the surrounding color and become nonobstructive. Thus, according to the configuration described above, the shadows of the spacers can be made inconspicuous, so that the image quality can be improved.

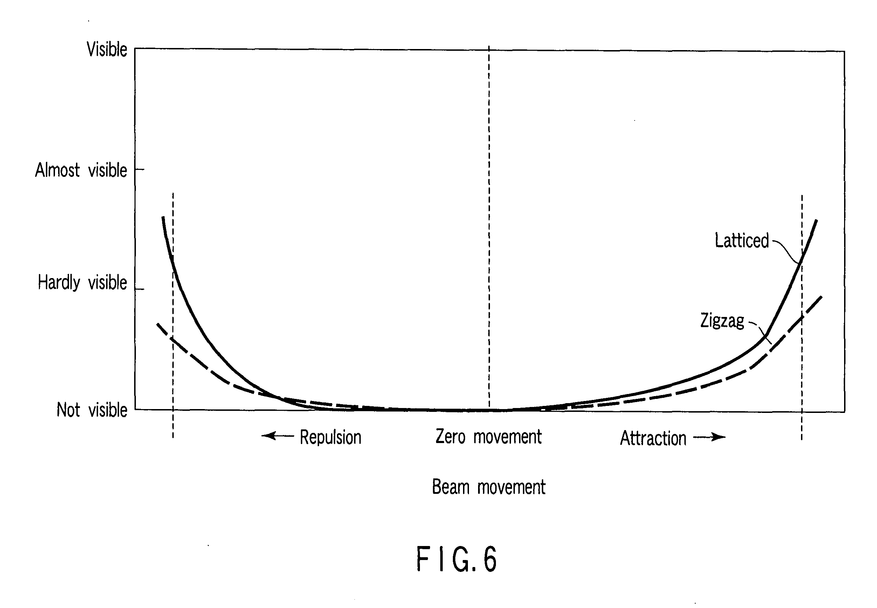

FIG. 6 shows the result of a test in which the SED according to the present embodiment and an SED with spacers arranged in a lattice were prepared and shadows attributable to the spacers were checked for inconspicuousness. If a plurality of spacers are located in a zigzag fashion, as is evident from this test result, the shadows of the spacers can be made inconspicuous, so that the image quality can be improved.

According to the configuration described above, moreover, the shadows of the spacers can be made inconspicuous without reducing the number of set spacers. Thus, an atmospheric load that acts on the first and second substrates can be satisfactorily supported by the plurality of spacers, whereby the strength of the vacuum envelope can be maintained.

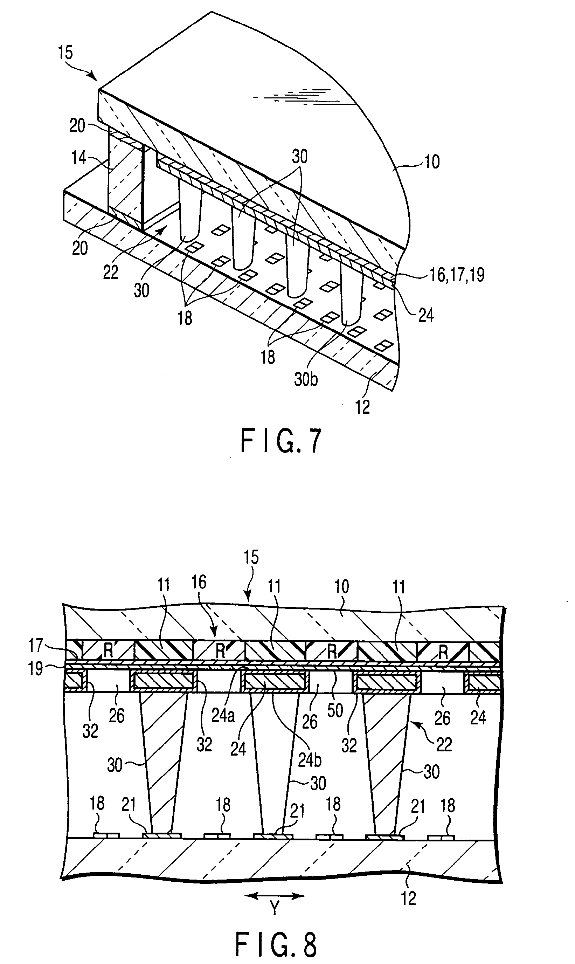

In an SED according to a second embodiment of this invention, as shown in FIGS. 7 and 8, a spacer structure 22 has a supporting substrate 24 in the form of a rectangular metal plate and a large number of columnar spacers 30 set up integrally on only one surface of the supporting substrate. The supporting substrate 24 has a first surface 24a opposed to the inner surface of a first substrate 10 and a second surface 24b opposed to the inner surface of a second substrate 12, and is located parallel to these substrates. A large number of electron beam apertures 26 are formed in the supporting substrate 24 by etching or the like. The electron beam apertures 26 are arrayed opposite electron emitting elements 18, individually, and are permeated by electron beams emitted from the electron emitting elements.

The first and second surfaces 24a and 24b of the supporting substrate 24 and the respective inner wall surfaces of the electron beam apertures 26 are covered by a high-resistance film as an insulating layer 32 formed of a dielectric substance that consists mainly of glass or ceramic. The supporting substrate 24 is provided in a manner such that its first surface 24a is in contact with the inner surface of the first substrate 10 with a getter film 19, a metal back 17, and a phosphor screen 16 between them. The electron beam apertures 26 in the supporting substrate 24 individually face phosphor layers R, G and B of the phosphor screen 16. Thus, the electron emitting elements 18 face their corresponding phosphor layers through the electron beam apertures 26.

A plurality of spacers 30 are set up integrally on the second surface 24b of the supporting substrate 24. Respective extended ends of the spacers 30 abut on the inner surface of the second substrate 12 or, in this case, wires 21 that are provided on the inner surface of the second substrate 12. Each of the spacers 30 is tapered so that its diameter is reduced from the supporting substrate 24 side toward its extended end. Each spacer 30 is formed having an elongate oblong cross section along a direction parallel to the surface of the supporting substrate 24. The spacers 30 are provided on the supporting substrate 24 in a manner such that the longitudinal direction of their cross section is in line with the X-direction of a vacuum envelope 15.

As in the case of the foregoing embodiment, the spacers 30 are arrayed in a so-called zigzag fashion. Specifically, the spacers 30 are arranged side by side to form a plurality of spacer columns. The spacer columns individually extend in the Y-direction and are arranged side by side with gaps in the X-direction between them. Each spacer column includes a plurality of spacers 30 that are arranged side by side with gaps in the Y-direction between them.

The plurality of spacers 30 that constitute each spacer column are staggered in the Y-direction with respect to a plurality of spacers that constitute other spacer columns adjacent thereto without overlapping them in the X-direction. In this case, the plurality of spacers 30 that constitute each spacer column are staggered by a pitch (P1/2) equal to half of the first pitch P1 in the Y-direction, with respect to the plurality of spacers 30a and 30b that constitute the adjacent other spacer columns. This deviation is not limited to P1/2 but may be increased or reduced as required. The distance between each spacer 30 and another spacer directly adjacent thereto is longer than the second pitch P2 in the X-direction.

In the second embodiment, other configurations are the same as those of the foregoing first embodiment, so that like reference numerals are used to designate like portions, and a detailed description thereof is omitted. The SED according to the second embodiment and its spacer structure can be manufactured by a manufacturing method identical to the manufacturing method according to the foregoing embodiment. The same functions and effects of the foregoing first embodiment can be also obtained from the second embodiment.

The present invention is not limited directly to the embodiments described above, and its components may be embodied in modified forms without departing from the spirit of the invention. Further, various inventions may be formed by suitably combining a plurality of components described in connection with the foregoing embodiments. For example, some of the components according to the embodiments may be omitted. Furthermore, components according to different embodiments may be combined as required.

The diameter and height of the spacers and the dimensions, materials, etc. of the other components are not limited to the foregoing embodiments, but may be suitably selected as required. In the foregoing embodiments, all the spacers that are provided in an image display region are arrayed in a zigzag fashion. Alternatively, however, lowering of the image quality caused by the shadows of the spacers may be restrained by arraying at least some of the spacers in the image display region in the aforesaid manner. This invention is not limited to image display devices that use surface-conduction electron emitting elements as electron sources, but may be also applied to image display devices that use other electron sources, such as the field-emission type, carbon nanotubes, etc.

### Industrial Applicability

According to the present invention, there may be provided the image display device in which the shadows of the spacers can be made inconspicuous without reducing the strength of the envelope, so that the image quality can be improved.

## Claims

1. An image display device comprising:
an envelope having a first substrate formed with a phosphor screen and a second substrate which is located opposite the first substrate across a gap and on which a plurality of electron emission sources configured to emit electron toward the phosphor screen are located; and
a plurality of spacers which are arranged between the first and second substrates and support an atmospheric load acting on the first substrate and the second substrate,
the plurality of spacers being located in a manner that a plurality of spacer columns, each column include the plurality of spacers arranged side by side with gaps therebetween in a first direction, are arranged side by side with gaps therebetween in a second direction, the first direction being a direction parallel to one side of the first substrate, the second direction being a direction perpendicular to the first direction,
the plurality of spacers which constitute each spacer column being located staggered in the first direction with respect to the plurality of spacers which constitute adjacent other spacer column.

2. The image display device according to claim 1, wherein the plurality of spacers constituting each of spacer columns are individually provided side by side at first pitches in the first direction.

3. The image display device according to claim 2, wherein the plurality of spacer columns are arranged side by side at second pitches in the second direction.

4. The image display device according to claim 3, wherein a distance between each spacer and another spacer directly adjacent thereto is longer than the second pitch.

5. The image display device according to any one of claims 1 to 4, wherein the plurality of spacers which constitute each of the spacer columns are staggered by a pitch equal to half of the first pitch in the first direction, with respect to the plurality of spacers which constitute the adjacent other spacer column.

6. The image display device according to any one of claims 1 to 4, which comprises a supporting substrate located between the first substrate and the second substrate and having a first surface opposed to the first substrate, a second surface opposed to the second substrate, and a plurality of electron beam apertures opposed to the electron emission sources, and wherein the spacers include a plurality of first spacers, which are individually set up on the first surface of the supporting substrate and have extended ends abutting on the first substrate, and a plurality of second spacers, which are individually set up on the second surface of the supporting substrate and have extended ends abutting on the second substrate.

7. The image display device according to claim 1 or 2, which comprises a supporting substrate located between the first substrate and the second substrate and having a first surface opposed to the first substrate, a second surface opposed to the second substrate, and a plurality of electron beam apertures opposed to the electron emission sources, and wherein the spacers are set up on the second surface of the supporting substrate and have extended ends abutting on the second substrate.

8. The image display device according to claim 1, wherein the spacers are columnar spacers.
